## Europäisches Patentamt

## European Patent Office

## Office européen des brevets

(19)

(11) Veröffentlichungsnummer: **0 022 550**
**B1**

(12) **EUROPÄISCHE PATENTSCHRIFT**

(45) Veröffentlichungstag der Patentschrift:
10.10.84

(51) Int. Cl.³: **C 09 J 3/14, C 08 L 29/04**

(21) Anmeldenummer: **80103905.8**

(22) Anmeldetag: **09.07.80**

(54) **Klebemittel auf Basis von Polyvinylalkohol und seine Verwendung.**

(30) Priorität: **13.07.79 DE 2928307**

(43) Veröffentlichungstag der Anmeldung:
**21.01.81 Patentblatt 81/3**

(45) Bekanntmachung des Hinweises auf die Patenterteilung:
**10.10.84 Patentblatt 84/41**

(84) Benannte Vertragsstaaten:
**BE DE FR GB IT NL SE**

(56) Entgegenhaltungen:
**DE - A - 2 702 260**
**DE - A - 2 715 434**
**FR - A - 1 469 352**
**US - A - 4 008 116**

(73) Patentinhaber: **HOECHST AKTIENGESELLSCHAFT,
Postfach 80 03 20, D-6230 Frankfurt am Main 80 (DE)**

(72) Erfinder: **Homanner, Alfons, Kronberger Weg 32,
D-6231 Sulzbach (DE)**
Erfinder: **Müller, Reinhold, Dr., Zell 19, D-6238 Hofheim
am Taunus (DE)**
Erfinder: **Schindler, Hermann, Dr., Rüdesheimer
Strasse 77, D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Klebemittel bestehen bekanntlich aus einem Grundstoff, der in der Regel ein natürliches oder synthetisches organisches Polymer ist, und verschiedenen Zusatzmitteln, die die Klebeeigenschaften des Grundstoffs oder die Anwendbarkeit des Klebemittels beeinflussen, z. B. Lösemittel, Weichmacher, Härter, Füllstoffe und Konservierungsmittel. Klebstoffe sind flüssige Klebemittel, deren Grundstoff in Wasser löslich ist; hierbei wird zwischen natürlichen Klebstoffen und Kunstharzklebstoffen unterschieden.

Kaseinklebstoffe sind natürliche Klebstoffe, die vor allem in der Getränkeindustrie zum Etikettieren von Flaschen verwendet werden. Wenn die Flaschen wiederverwendet werden sollen und die Etiketten abgewaschen werden, gelangt der Kaseinklebstoff in das Abwasser; dort zersetzt sich das Kasein leicht und führt zu Umweltbelästigungen. Demgegenüber sind Kunstharzklebstoffe weniger leicht zersetzbar. Als Etikettenklebstoff ist beispielsweise ein Gemisch bekannt, das aus Wasser, Stärke, Harnstoff und einem Ammoniumsalz eines Styrol/Maleinsäureanhydrid-Copolymers besteht und einen pH-Wert von 7,5 bis 9,2 aufweist (vgl. US-Patentschrift 3 857 803). Ferner ist bekannt, daß wäßrige Lösungen von Polyvinylalkohol gute Klebeigenschaften haben und sich grundsätzlich als Gummierklebstoff für Etiketten eignen (vgl. Ullmanns Encyklopädie der technischen Chemie, 3. Auflage 1957, Band 9, Seite 603). Weiterhin ist bekannt, daß Klebstofflösungen auf Basis von Polyvinylalkohol, die noch Stärke und ein anorganisches Verdickungsmittel sowie gegebenenfalls übliche Konservierungs- und Antischaummittel enthalten, zum maschinellen Etikettieren von Getränkeflaschen verwendet werden (vgl. deutsche Auslegeschrift 2 364 438 = US-Patentschrift 40 08 116).

Aufgabe der Erfindung ist die Schaffung eines Klebemittels auf der Grundlage von Polyvinylalkohol (PVAL), das lagerstabil ist, eine gute Kaltwasserbeständigkeit und Schwitzwasserbeständigkeit aufweist und keinen Fadenzug zeigt.

Die Erfindung betrifft nun ein Klebemittel auf Basis von Polyvinylalkohol, das dadurch gekennzeichnet ist, daß es aus einem Gemisch aus (a) 4 bis 30 Gewichtsprozent Polyvinylalkohol mit einer Esterzahl von 0 bis 273 mg KOH/g, dessen 4-gewichtsprozentige wäßrige Lösung bei 20°C eine Viskosität von 2,5 bis 100 mPa.s aufweist, (b) 65 bis 94 Gewichtsprozent Wasser, (c) 0,5 bis 5 Gewichtsprozent Polymethacrylsäure sowie (d) 0,5 bis 20 Gewichtsprozent Harnstoff, Glukose oder eines Polyglykols und gegebenenfalls (e) 1 bis 20 Gewichtsprozent eines üblichen Haftvermittlers besteht.

Die Erfindung betrifft ferner die Verwendung des vorgenannten Klebemittels zum Fixieren von Folien, z. B. aus Metall, thermoplastischem Kunststoff und insbesondere Papier, auf Gegenständen mit glatter Oberfläche, z. B. Gegenständen aus Metall, Kunststoff und insbesondere Glas. Besonders bevorzugt ist die Verwendung des erfindungsgemäßen Klebemittels zum Fixieren von Etiketten auf Glasflaschen.

Das erfindungsgemäße Klebemittel ist vorzugsweise zusammengesetzt aus (a) 5 bis 26 Gewichtsprozent Polyvinylalkohol, (b) 70 bis 90 Gewichtsprozent Wasser, (c) 1 bis 3 Gewichtsprozent Polymethacrylsäure sowie (d) 1 bis 15 Gewichtsprozent Harnstoff, Glukose oder eines Polyglykols und gegebenenfalls (e) 2 bis 10 Gewichtsprozent eines üblichen Haftvermittlers.

Der erfindungsgemäß verwendete Polyvinylalkohol wird in bekannter Weise durch Verseifung, vorzugsweise durch Alkoholyse, von Polyvinylestern, vorzugsweise Polyvinylacetat, hergestellt (vgl. z. B. deutsche Patentschrift 1 720 709 = britische Patentschrift 1 168 757). Der PVAL hat eine Esterzahl von 0 bis 273 mg KOH/g, vorzugsweise von 90 bis 150 mg KOH/g oder von 1 bis 30 mg KOH/g. Dies entspricht einem Hydrolysegrad von 100 bis 73 Molprozent, vorzugsweise von 92 bis 87 Molprozent oder von 99,9 bis 97,06 Molprozent. Die 4-gewichtsprozentige wäßrige Lösung des PVAL, gemessen bei 20°C nach Höppler gemäß DIN 53 015, hat eine Viskosität von 2,5 bis 100 mPa.s, vorzugsweise von 4 bis 60 mPa.s.

Das erfindungsgemäße Klebemittel enthält zum Zwecke der Fadenzugverhinderung ein übliches Verdickungsmittel, nämlich Poly(methacrylsäure).

Das Klebemittel enthält auch eine leicht wasserlösliche organische Verbindung; dadurch wird das Ablösen der mit dem Klebemittel auf einem glatten Substrat fixierten Folie erleichtert. Von besonderem Vorteil ist die Anwesenheit der leicht wasserlöslichen organischen Verbindung, wenn das Klebemittel zum Fixieren von Etiketten auf Glasflaschen verwendet wird. Der Ausdruck »leicht wasserlöslich« soll hier bedeuten, daß mindestens 1 Gewichtsteil der Verbindung in 1 Gewichtsteil Wasser von 20°C löslich ist. Geeignete Verbindungen sind Harnstoff, Glukose und Polyglykole, insbesondere Polyethylenglykole mit einem Molekulargewicht von 200 bis 20 000, vorzugsweise von 500 bis 1000.

Die Haftung einer Folie, die mit einem Klebemittel beschichtet ist, auf einem glatten Substrat kann dadurch verbessert werden, daß ein Klebemittel verwendet wird, das zusätzlich noch einen Haftvermittler enthält. Das erfindungsgemäße Klebemittel enthält gegebenenfalls einen Haftvermittler in einer Menge von 1 bis 20 Gewichtsprozent, vorzugsweise 2 bis 10 Gewichtsprozent. Als Haftvermittler eignen sich vor allem wäßrige Dispersionen von Polyvinylestern mit einem Feststoffgehalt von 20 bis 60 Gewichtsprozent, vorzugsweise 40 bis 55 Gewichtsprozent. Unter Polyvinylestern werden hierbei Homopolymere und Copolymere von Vinylestern, vorzugsweise Vinylacetat, verstanden.

Bevorzugte Haftvermittler sind Dispersionen von Copolymeren des Vinylacetats mit mindestens einem weiteren Vinylmonomer, insbesondere (a) Olefinen, z. B. Ethylen, Propylen und Isobutylen, (b) Styrol, N-Vinylpyrrolidon und Vinylpyridin, (c) Vinylether, z. B. Vinylmethylether, Vinylethylether und Vinyl-n-butylether, (d) Vinylester von aliphatischen Carbonsäuren mit 3 bis 10 Kohlenstoffatomen, z. B. Vinylpropionat, Vinylbutyrat, Vinylpivalat, Vinylisononat, Vinyllaurat und Vinyldecanate, (e) Nitrile ungesättigter Carbonsäuren, z. B. Acrylnitril und Methacrylnitril, (f) Vinylhalogenide, z. B. Vinylchlorid und Propenylchlorid, und (g) Acrylsäureester oder Methacrylsäureester von einwertigen Alkanolen mit 1 bis 8 Kohlenstoffatomen, z. B. Methylacrylat, Ethylacrylat, Butylacrylat, 2-Ethylhexylacrylat, Methylmethacrylat, Ethylmethacrylat, Butylmethacrylat, Hexylmethacrylat, Octylmethacrylat und 2-Ethylhexylmethacrylat. Ebenfalls geeignete Vinylmonomere sind Maleinsäurediester und Fumarsäurediester, insbesondere von einwertigen Alkanolen mit 2 bis 10, vorzugsweise 3 bis 8 Kohlenstoffatomen, z. B. Dibutylmaleinat, Dihexylmaleinat, Dioctylmaleinat, Dibutylfumarat, Dihexylfumarat und Dioctylfumarat. Die genannten Copolymeren werden in üblicher Weise durch Emulsionspolymerisation der jeweiligen Monomeren hergestellt, wobei der Anteil des Vinylacetats 50 bis 95 Gewichtsprozent, vorzugsweise 60 bis 90 Gewichtsprozent beträgt und der des weiteren Vinylmonomers 50 bis 5 Gewichtsprozent, vorzugsweise 40 bis 10 Gewichtsprozent.

Zur Verhütung einer möglichen Zersetzung des PVAL durch Mikroorganismen kann das Klebemittel zusätzlich noch ein Konservierungsmittel enthalten. Die Menge des Konservierungsmittels beträgt normalerweise 0,01 bis 0,5 Gewichtsprozent, vorzugsweise 0,02 bis 0,2 Gewichtsprozent (bezogen auf die PVAL-Menge). Als Konservierungsmittel eignen sich beispielsweise handelsübliche Mittel, die Chloracetamid oder Phenolderivate enthalten.

Zur Unterdrückung einer gelegentlich möglichen Schaumbildung kann das Klebemittel ein Entschäumungsmittel enthalten; dessen Menge beträgt im allgemeinen 0,01 bis 1,0 Gewichtsprozent, vorzugsweise 0,02 bis 0,5 Gewichtsprozent (bezogen auf die PVAL-Menge). Als Entschäumungsmittel eignen sich beispielsweise handelsübliche, ölige Kombinationen von hydrophoben Silizium-Verbindungen mit Kohlenwasserstoffen.

Der Feststoffgehalt des erfindungsgemäßen Klebemittels liegt üblicherweise im Bereich von 5 bis 50 Gewichtsprozent, vorzugsweise von 10 bis 30 Gewichtsprozent. Das Klebemittel zeigt unter Normalbedingungen eine zähflüssige Konsistenz. Seine Viskosität beträgt 20 bis 100 Pa.s, vorzugsweise 40 bis 70 Pa.s (gemessen nach Brookfield mit Spindel 6 und 20 Upm). Die Lagerbeständigkeit des Klebemittels beträgt im allgemeinen mindestens 12 Monate, ohne daß die Klebfähigkeit beeinträchtigt wird. Der pH-Wert des Klebemittels liegt zweckmäßigerweise im Bereich von 3 bis 8, vorzugsweise von 4 bis 7 (gemessen nach DIN 53 785).

Die Erfindung wird durch die folgenden Beispiele näher erläutert; Mengen- und Prozentangaben beziehen sich dabei jeweils auf das Gewicht.

### Beispiel 1

a) In einem mit Thermometer versehenen Rührkessel werden 14,9 Teile Polyvinylalkohol mit einer Esterzahl von 140 mg KOH/g, dessen 4-prozentige Lösung eine Viskosität von 40 mPa.s aufweist, bei Raumtemperatur unter Rühren mit 73,9 Teilen Wasser und 0,2 Teilen eines handelsüblichen Konservierungsmittels auf Chloracetamid-Basis vermischt. Das Gemisch wird dann auf eine Temperatur von 95°C erhitzt, wobei der Polyvinylalkohol sich auflöst. Nach Zugabe von 1,7 Teilen eines handelsüblichen Verdickungsmittels auf Basis von Polymethacrylsäure und 9 Teilen Harnstoff wird das Gemisch durch Rühren homogenisiert und nach Abkühlen auf Raumtemperatur unter Rühren mit 0,3 Teilen konzentrierter wäßriger Ammoniaklösung versetzt.

Das erhaltene Klebemittel hat einen Feststoffgehalt von 24% und eine Viskosität von 42 Pa.s. Der pH-Wert des Klebemittels beträgt 7. Es zeigt keinen Fadenzug.

b) Mit dem Klebemittel werden Etiketten aus Natron-Kraftpapier (75 g/m²) auf fabrikneue Bierflaschen geklebt. Die Verklebung zeigt eine Kaltwasserbeständigkeit (bei 20°C) von 10 Stunden. Die Ablösezeit in Wasser von 70°C, das 1% Natronlauge enthält, beträgt 4,5 Minuten.

### Beispiel 2

a) In einem mit Thermometer versehenen Rührkessel werden 14,8 Teile Polyvinylalkohol mit einer Esterzahl von 140 mg KOH/g, dessen 4-prozentige Lösung eine Viskosität von 40 mPa.s aufweist, bei Raumtemperatur unter Rühren mit 73,9 Teilen Wasser und 0,2 Teilen eines handelsüblichen Konservierungsmittels auf Chloracetamid-Basis vermischt. Das Gemisch wird dann auf eine Temperatur von 95°C erhitzt, wobei der Polyvinylalkohol sich auflöst. Nach Zugabe von 1,7 Teilen eines handelsüblichen Verdickungsmittels auf Basis von Polymethacrylsäure und 9 Teilen Polyglykol mit einem Molekulargewicht von 400 wird das Gemisch durch Rühren homogenisiert und nach Abkühlen auf Raumtemperatur unter Rühren mit 0,3 Teilen Natronlauge (10%ig) versetzt.

Das erhaltene Klebemittel hat einen Feststoffgehalt von 24% und eine Viskosität von 40 Pa.s. Der pH-Wert des Klebemittels beträgt 7. Es zeigt keinen Fadenzug.

b) Mit dem Klebemittel werden Etiketten aus Natron-Kraftpapier (75 g/m²) auf fabrikneue Bierflaschen geklebt. Die Verklebung zeigt eine Kaltwasserbeständigkeit (bei 20°C) von 2 Stunden. Die Ablösezeit in Wasser von 70°C, das 1% Natronlauge enthält, beträgt 4 Minuten.

**Patentansprüche**

1. Klebemittel auf Basis von Polyvinylalkohol, dadurch gekennzeichnet, daß es aus einem Gemisch aus (a) 4 bis 30 Gewichtsprozent Polyvinylalkohol mit einer Esterzahl von 0 bis 273 mg KOH/g, dessen 4-gewichtsprozentige wäßrige Lösung bei 20°C eine Viskosität von 2,5 bis 100 mPa.s aufweist, (b) 65 bis 94 Gewichtsprozent Wasser, (c) 0,5 bis 5 Gewichtsprozent Polymethacrylsäure sowie (d) 0,5 bis 2,0 Gewichtsprozent Harnstoff, Glukose oder eines Polyglykols und gegebenenfalls (e) 1 bis 20 Gewichtsprozent eines üblichen Haftvermittlers besteht.

2. Klebemittel nach Anspruch 1, dadurch gekennzeichnet, daß der Polyvinylalkohol eine Esterzahl von 90 bis 150 mg KOH/g oder von 1 bis 30 mg KOH/g aufweist.

3. Klebemittel nach Anspruch 1, dadurch gekennzeichnet, daß die 4-gewichtsprozentige wäßrige Lösung des Polyvinylalkohols bei 20°C eine Viskosität von 4 bis 60 mPa.s aufweist.

4. Klebemittel nach Anspruch 1, dadurch gekennzeichnet, daß der Haftvermittler eine wäßrige Dispersion eines Polyvinylesters mit einem Feststoffgehalt von 20 bis 60 Gewichtsprozent ist.

5. Verwendung des Klebemittels nach Anspruch 1 zum Fixieren von Folien auf Gegenständen mit glatter Oberfläche.

6. Verwendung des Klebemittels nach Anspruch 1 zum Fixieren von Etiketten auf Glasflaschen.

**Claims**

1. An adhesive based on polyvinyl alcohol, characterized in that the adhesive consists of a mixture of
a) 4 to 30 weight% of a polyvinyl alcohol having an ester number of from 0 to 273 mg KOH/g, the 4 weight% aqueous solution of which has a viscosity of from 2.5 to 100 mPa.s at 20°C,
b) 65 to 94 weight% of water,
c) 0.5 to 5 weight% of polymethacrylic acid and
d) 0.5 to 2.0 weight% of urea, glucose or a polyglycol and optionally
e) 1 to 20 weight% of a usual adhesion promoter.

2. The adhesive of claim 1, characterized in that the polyvinyl alcohol has an ester number of from 90 to 150 mg KOH/g or of from 1 to 30 mg KOH/g.

3. The adhesive of claim 1, characterized in that the 4 weight% aqueous solution of the polyvinyl alcohol has a viscosity at 20°C of from 4 to 60 mPa.s.

4. The adhesive of claim 1, characterized in that the adhesion promoter is an aqueous dispersion of a polyvinyl ester having a solids content of from 20 to 60 weight%.

5. Use of the adhesive of claim 1 for fastening sheets to articles having a smooth surface.

6. Use of the adhesive of claim 1 for fastening labels to glass bottles.

**Revendications**

1. Adhésif à base d'un poly-(alcool vinylique) caractérisé en ce qu'il est constitué d'un mélange de (a) 4 à 30% en poids d'un poly-(alcool vinylique) ayant un indice d'ester de 0 à 273 mg de KOH par gramme et dont la solution aqueuse à 4% en poids présente, à 20°C, une viscosité de 2,5 à 100 mPa.s, (b) 65 à 94% en poids d'eau, (c) 0,5 à 5% en poids de poly-(acide méthacrylique), (d) 0,5 à 20% en poids d'urée, de glucose ou d'un polyglycol et éventuellement (e) 1 à 20% en poids d'un adjuvant d'adhérence usuel.

2. Adhésif selon la revendication 1 caractérisé en ce que le poly-(alcool vinylique) a un indice d'ester de 90 à 150 mg de KOH/g ou de 1 à 30 mg de KOH/g.

3. Adhésif selon la revendication 1 caractérisé en ce que la solution aqueuse à 4% en poids du poly-(alcool vinylique) présente, à 20°C, une viscosité de 4 à 60 mPa.s.

4. Adhésif selon la revendication 1 caractérisé en ce que l'adjuvant d'adhérence est une dispersion aqueuse d'un poly-(ester vinylique) ayant une teneur en matière solide de 20 à 60% en poids.

5. Application de l'adhésif selon la revendication 1 au fixage de feuilles sur des objets à surface lisse.

6. Application de l'adhésif selon la revendication 1 au fixage d'étiquettes sur des bouteilles en verre.